# EUROPÄISCHE PATENTSCHRIFT

(11) **EP 2 363 358 B1**
(45) Veröffentlichungstag und Bekanntmachung des Hinweises auf die Patenterteilung: **14.10.2015**
(21) Anmeldenummer: 11156402.7
(22) Anmeldetag: 01.03.2011
(51) Int. Cl.: B65G 19/02, B61B 10/02

(54) **Förderanlage für hängende Gegenstände**
Transport assembly for suspended objects
Installation de transport pour objets suspendus

(30) Priorität: 04.03.2010 DE 102010010107
(43) Veröffentlichungstag der Anmeldung: 07.09.2011
(73) Patentinhaber: Dürkopp Fördertechnik GmbH, 33719 Bielefeld (DE)
(72) Erfinder: Wend, Michael, 33619, Bielefeld (DE); Janzen, Paul, 33619, Bielefeld (DE)
(74) Vertreter: Rau, Schneck & Hübner Patentanwälte Rechtsanwälte PartGmbB

(56) Entgegenhaltungen:
- DE-A1- 3 812 023
- US-A- 5 819 906

## Beschreibung

Die Erfindung betrifft eine Förderanlage für hängende Gegenstände nach dem Oberbegriff von Anspruch 1.

Eine derartige Förderanlage ist aus der DE 10 2005 006 455 A1 bekannt, bei der in einer Transport-Schiene ein Trum einer umlaufenden, in einer Förderrichtung antreibbaren Antriebs-Kette angeordnet ist. Die Antriebs-Kette ist mit nach unten vorstehenden Bolzen ausgebildet. Unterhalb der Antriebs-Kette sind in der Transport-Schiene auf Rollen gelagerte Halteelemente vorgesehen, die an ihrem unteren Ende eine Öffnung zur Aufnahme des Hakens eines Bügels mit einem Kleidungsstück ausgebildet sind. Die Halteelemente weisen jeweils an ihren oberen Enden Anschläge auf, die zwischen benachbarte Bolzen ragen, so dass eine formschlüssige Antriebsverbindung zwischen der Antriebs-Kette und den Halteelementen hergestellt ist. Die als Transport-System bezeichnete Förderanlage weist keine Einrichtung auf, die ein Aufstauen von Halteelementen bei ununterbrochenem Antrieb der Antriebs-Kette gestattet.

Aus der EP 0 623497 B1 ist ein staufähiger Förderer bekannt, bei dem auf einer Tragschiene mittels drehbar gelagerter Rollen gelagerte Träger für Fördergut angeordnet und von einem, ebenso an der Tragschiene gelagerten Zugmittel in Form eines Reibbands in einer Förderrichtung antreibbar. Zum Zweck eines gewünschten Aufstauens von Trägern ist eine Stoppvorrichtung mit einem Haltefinger vorgesehen, der in den Bewegungsraum der Träger einfahrbar ist und auf eine an dem Träger befestigte Spreizvorrichtung einwirkt, womit ein seitliches Verschwenken und damit ein Abheben des Trägers von dem Reibband erfolgt.

Nachteilig bei dieser Anordnung ist, dass ein Abheben nachfolgender Träger von dem Reibband voraussetzt, dass die den einzelnen Trägern zugehörigen Spreizvorrichtungen in direkten Kontakt miteinander gelangen müssen. Das Abheben der Träger von dem Reibband, also ein Herbeiführen des Trägers in einen antriebsfreien Zustand ist dagegen nicht erreichbar, wenn das Fördergut eine in der Förderrichtung abmessenden Erstreckung, also Dicke des Förderguts aufweist, die größer als der Abstand von dicht an dicht zueinander befindlicher Träger ist. Damit verbleibt eine reibschlüssige Antriebsverbindung zwischen angehaltenen Trägern und dem stetig laufenden Reibband, was zu übermäßigem Verschleiß und damit zu unerwünschten Stillstandszeiten zur Vornahme von Reparaturarbeiten an der Förderanlage führt. Weiter nachteilig ist, dass das Abheben des Trägers durch eine Verschwenken desselben erfolgt, wobei die aus Kunststoff elastisch verformbaren Spreizvorrichtungen mit in Abhängigkeit von der Masse des Förderguts auftretenden Trägheitskräfte belastet werden und so zu einem vorzeitigen Verschleiß führen.

Aus der DE 296 21 786 U1 ist ein Stauklinkenförderer bekannt, bei der an einem in einer Förderrichtung antreibbaren Zugmittel schwenkbar gelagerte Klinken mit einem hakenförmigen Ende vorgesehen sind und damit verschiebbar auf einer Schiene befindliche Bügel mit Fördergut erfassen und befördern. Die besondere Form der Klinken gestattet ein Aufstauen von Bügeln mit Hilfe einer Einrichtung, eine Klinke durch ein mit der Klinkenunterseite zur Anlage gelangendes Stoppelement anzuheben und damit das hakenförmige Ende außer Eingriff mit dem Bügel zu bringen und das weitere Anheben nachfolgender Klinken durch den zuvor in den Stillstand versetzen Bügel zu veranlassen. Nachteilig einerseits ist bei dieser Fördereinrichtung, dass ein lückenloses Aufstauen von Bügeln nur unter bestimmten konstruktiven Vorgaben für die Abmessungen der Klinken und dementsprechend zugehörige Dicken-Abmessungen des Förderguts erreichbar ist. Andererseits ist besonders nachteilig, dass es zu einer übermäßigen Belastung der hakenförmigen Enden der Klinken bei einem eingeleiteten Stauvorgang kommen kann, wenn das Verschwenken einer Klinke infolge eines vorangegangenen, übermäßig dicken Förderguts nicht möglich ist. Abhilfe des letztgenannten Nachteils soll durch eine nach der DE 299 15 523 U1 ausgebildeten Klinke erreicht werden.

Aus der DE 40 17 821 C2 ist eine Förderanlage bekannt, bei der ein Fördern von auf Laufschienen geführten Tragwagen für Fördergut mit Hilfe Borsten erfolgen, die als Mitnehmer an einem angetriebenen Riementrum angeordnet sind und mit einem Teil der Tragwagen in Reibkontakt gelangen. Im Fall eines erwünschten Aufstauens von Fördergut erfolgt ein Stoppen der Tragwagen, während die Borsten ungeachtet dessen weiterlaufen und eine restliche Reibkraft auf die Tragwagen ausüben. Bei dieser Förderanlage sollen die Borsten wie eine Rutschkupplung wirken, die eine frei von sonstigen Kriterien lösbare Antriebsverbindung darstellt und ein lückenloses Aufstauen von Fördergut ungeachtet seiner Dicken-Abmessung gestattet. Die Art der Antriebsverbindung, bei dem die Mitnehmer mit den Borsten in Eingriff gelangen und während eines Stauvorgangs relativ zueinander bewegt werden, ist einem erheblichen Verschleiß an den Bürsten unterworfen. Dies bedingt Stillstandszeiten, um verschlissene Borsten durch neue zu ersetzen.

Aus der DE 297 09 547 U1 ist eine Hängeförderanlage bekannt, bei der auf Rollen gelagerte, durch eine darüber befindliche Förderkette angetriebene Bügelträger auf einer Hauptförderstrecke bewegbar sind. Hierzu sind an der Förderkette in regelmäßigen Abständen Mitnehmer befestigt, die mit starren Kupplungselementen an den Bügelträgern kooperieren. Mit Hilfe einer Weichenstation können Bügelträger aus der Hauptförderstrecke zur Seite auf eine Staustrecke abgezweigt werden, womit die Antriebsverbindung gelöst wird. Der weitere Antrieb der abgeleiteten Bügelträger erfolgt durch eine getrennte Antriebsvorrichtung. Im Bereich einer Staustrecke ist eine als Stausperre bezeichnete Stoppvorrichtung vorgesehen, an der sich Bügelträger aufstauen. Das Erfordernis, für den Antrieb der in der Staustrecke aufzustauenden Bügelträger eine eigene, kompliziert aufgebaute Antriebsvorrichtung zuordnen zu müssen, macht die Hängeförderanlage außerordentlich aufwändig.

Aus der US 5 819 906 A (entsprechend DE 92 09 663 U1) ist eine Hängeförderanlage nach dem Oberbegriff des Anspruchs 1 bekannt, bei der auf Rollen gelagerte, durch eine darüber befindliche Förderkette angetriebene Bügelträger auf einer Hauptförderstrecke bewegbar sind. Hierzu sind an der Förderkette Gliederplatten angeordnet, die auf Bolzen höhenverschiebbar geführt sind, die wiederum nach unten ragend an der Förderkette angebracht sind. Diese Gliederplatten greifen derart ineinander, dass sie um vertikale Achsen biegbar, also um Kurven führbar sind, dass sie aber nur gemeinsam in der Höhe verschiebbar sind. An der Unterseite der in Förderrichtung ersten Gliederplatte ist eine Auflaufschräge angeordnet, gegen die eine Rampe eines Bügelträgers anliegt, wodurch dieser von der Förderkette in Förderrichtung mitnehmbar sein soll. An der in Förderrichtung letzten Gliederplatte einer solchen Einheit von Gliederplatten ist eine hakenartige, nach unten ragende Fläche ausgebildet, die einen Vorsprung bzw. die Rampe am Bügelträger untergreift und somit eine formschlüssige Verbindung mit dem zugeordneten Bügelträger herstellt. Wenn der voreilende, durch Reibschluss angetriebene Bügelträger gegen einen Anschlag fährt, wird die Gliederplatte vertikal nach oben verschoben, wodurch die formschlüssige Verbindung mit dem nacheilenden Bügelträger aufgehoben werden soll. Nachteilig an dieser Lösung ist, dass die Verbindung zwischen der Gliederplatte und dem voreilenden Bügelträger wegen des zwangsläufig geringen Gewichts der Gliederplatten undefiniert ist, und dass die Lösung der Verbindung mit dem nacheilenden Bügelträger ebenfalls undefiniert ist. Außerdem ist diese bekannte Ausgestaltung sehr aufwendig.

Aus der DE 38 12 023 A1 ist eine Hängeförderanlage bekannt, bei der auf einem Rohr dieses hakenförmig umgreifende Mitnehmerelemente geführt sind. Oberhalb dieses Rohres ist eine umlaufende Förderkette angeordnet, deren Kettenglieder horizontal angeordnet sind. An jeweils einem Kettenglied ist ein Mitnehmerelement angebracht, das an seinem in Förderrichtung vorderen Ende eine Schrägfläche aufweist. An seinem hinteren Ende ist es mit einer nach unten offenen Nut versehen, in der der das Rohr teilweise umgreifende Abschnitt eines Transporthakens aufgenommen wird. Wenn das Mitnehmerelement mit seiner voreilenden Schrägfläche auf einen auf dem Rohr angebrachten Anschlag aufläuft, wird es angehoben, wodurch der Transporthaken freigegeben wird.

Der Erfindung liegt die Aufgabe zugrunde, die gattungsgemäße Anlage derart weiterzubilden, dass eine zuverlässig und weitgehend verschleißfrei arbeitende Betriebsweise der Anlage zum Fördern und lückenlosen Aufstauen von Gegenständen ungeachtet derer Eigenschaften erreicht wird.

Die Lösung dieser Aufgabe erfolgt bei der Förderanlage nach dem Oberbegriff von Anspruch 1 durch dessen kennzeichnende Merkmale.

Mit der Erfindung wird eine formschlüssige oder kraftschlüssige Antriebsverbindung zwischen den zu befördernde Gegenstände tragenden Halteelementen und der Antriebskette mit einer kleinstmöglichen Anzahl von einfachen Bauteilen nahezu verschleißfrei erreicht. Besonders vorteilhaft ist, dass die Antriebskette ein zu niedrigen Kosten im Handel verfügbares genormtes Massenteil ist, dem durch die Anordnung eines einzigen Bauteils ein wesentliches Merkmal der Erfindung zukommt. Weiter zeichnet sich der Erfindungsgegenstand dadurch aus, dass die bei der Durchführung eines Stauvorgangs auftretenden Kräfte unabhängig von der Masse des Förderguts sind und ein lückenloses Aufstauen des Förderguts unabhängig von den Abmessungen des Förderguts erreicht wird.

Mit den Ansprüchen 2 bis 4 und 9 bis 13 werden vorteilhafte Kraft-Verhältnisse erreicht. Die Weiterbildungen nach den Ansprüche 5 und 6 führen zu einer besonders einfachen und Kosten sparenden Konstruktion. Gemäß Anspruch 7 wird eine einfache vorteilhafte Ausgestaltung vorgeschlagen, die eine einfache Montage und gegebenenfalls einen einfach auszuführenden Austausch eines verschlissenen gegen ein neues Kupplungsteil vorzunehmen. Mit dem Merkmal von Anspruch 8 wird eine Kosten sparende Herstellung eines oberen Kupplungsteils erzielt.

Weitere Merkmale, Vorteile und Einzelheiten der Erfindung ergeben sich aus der folgenden Beschreibung eines Ausführungsbeispiels anhand der Zeichnung.

Es zeigt:
- Fig. 1: eine Förderanlage in einer Teil-Vorderansicht,
- Fig. 2: eine Schnittansicht der Förderanlage entsprechend der Schnittlinie II-II in Fig. 1 in vergrößertem Maßstab,
- Fig. 3: eine Seitenansicht einer Antriebskette mit oberen Kupplungsteilen entsprechend dem Sichtpfeil III-III in Fig. 2,
- Fig. 4: eine perspektivische Ansicht des in Fig. 3 dargestellten oberen Kupplungsteils,
- Fig. 5: eine Ansicht der Antriebskette gemäß dem Sichtpfeil V in Fig. 3,
- Fig. 6: eine Seitenansicht der Förderanlage entsprechend dem Sichtpfeil III-III in Fig. 2, wobei die vordere Wandung einer Transport-Schiene weg gebrochen ist,
- Fig. 7: eine schematische Ansicht der Förderanlage entsprechend der Ansicht von Fig. 6, und
- Fig. 8: eine Einzelheit Z aus Fig. 7 in vergrößertem Maßstab.

Eine Transport-Schiene 1 ist im Wesentlichen waagerecht verlaufend an einer Wand oder Decke befestigt. Die aus Aluminium-Strangguss gefertigte Transport-Schiene 1 weist einen kastenförmigen und symmetrisch ausgebildeten Querschnitt mit einem an der Unterseite 2 befindlichen Schlitz 3 auf. Die Transport-Schiene 1 ist mit sich von einer oberen Wand 4 nach unten hin erstreckenden Seitenwänden 5, 6 ausgebildet, die an ihren einander zugewandten Innenseiten Ausnehmungen mit darin angeordneten Vorsprüngen aufweisen. In den Ausnehmungen sind jeweils aus Kunststoff gefertigte Profile als Lager 7, 8 formschlüssig gehalten und fest eingebettet.

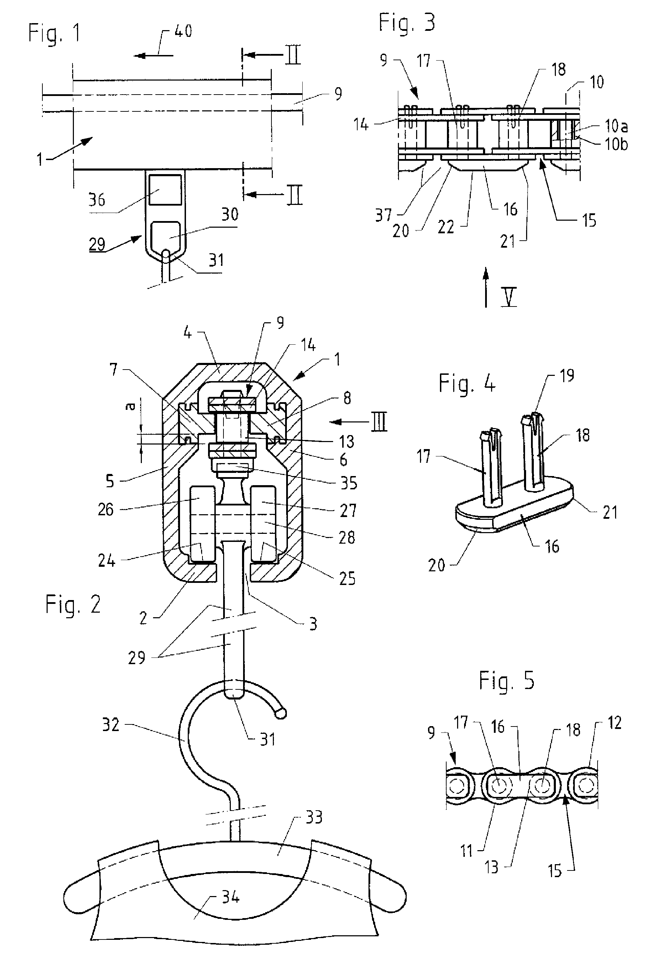

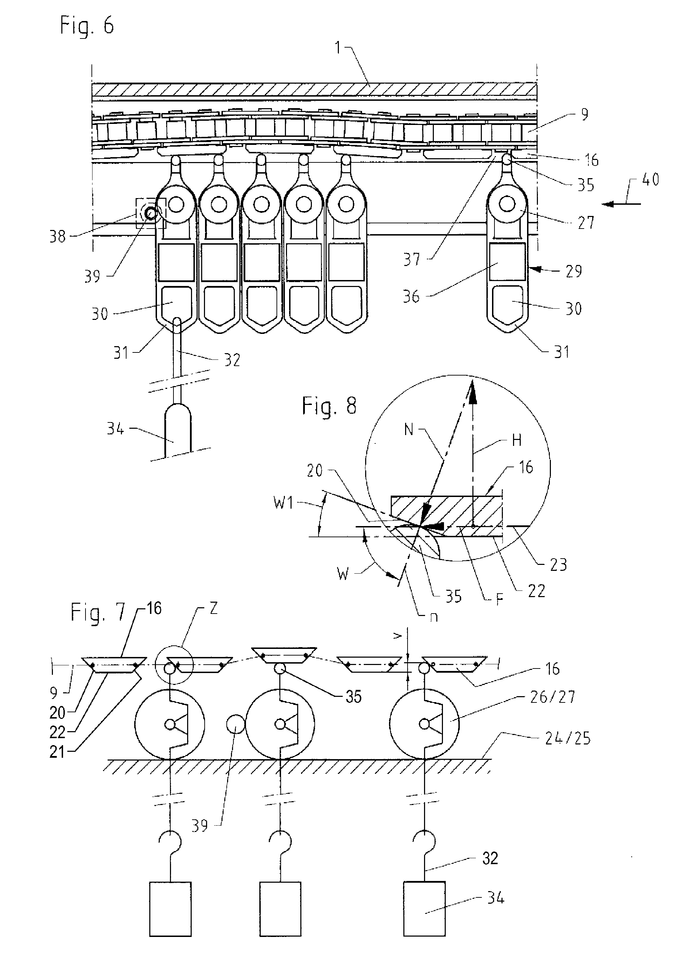

Die Lager 7, 8 nehmen mit ihren zugewandten rechteckigen Enden zwischen sich ein Trum einer endlosen Antriebskette 9 mit Spiel auf. Die Antriebskette 9 ist mittels eines in Fig. 1 nicht dargestellten Elektromotors umlaufend antreibbar. Die Antriebskette 9 weist als handelsübliche Rollenkette um vertikale Achsen 10 schwenkbare Gelenke 11 auf, wobei Blechlaschen 12 durch hohle, mit Bohrungen 10a ausgebildete Nieten 10b miteinander verbunden sind. Die Gelenke 11 der Antriebskette 9 sind mit normalem Spiel ausgeführt, womit auch erreicht wird, dass die Antriebskette 9 in einem leicht gekrümmten Bogen verlaufen kann, wie dies in Fig. 6 dargestellt ist.

Die Anordnung der Antriebskette 9 in der Transport-Schiene 1 ist derart, dass einerseits eine horizontale Führung an ihren auf den Nieten 10b drehbar gelagerten Rollen 13 erreicht wird. Andererseits wird eine vertikale Führung in der Weise erreicht, dass die Antriebskette 9 auf Grund ihres Eigengewichts mit den Unterseiten von Laschen 14 auf den Lagern 7, 8 aufliegt. Weiter sind die Lager 7, 8 in vertikaler Richtung derart bemessen, dass die Antriebskette 9 um eine Strecke a entgegen der Richtung der Schwerkraft verschiebbar gelagert ist.

An der Unterseite 15 der Antriebskette 9 ist an jedem Kettenglied ein oberes Kupplungsteil 16 angeordnet, welches vorzugsweise aus Kunststoff gefertigt ist. Das Kupplungsteil 16 ist mit zwei Zapfen 17, 18 ausgebildet, die in den Bohrungen 10a der hohlen Nieten 10b aufgenommen sind. Gemäß Fig. 4 bilden die abgeflachten, geschlitzten und gespreizten Enden jeweils einen Schnappverschluss 19, mit dem die Kupplungsteile 16 fest an der Antriebkette 9 gesichert sind. Die Schnappverschlüsse 19 gestatten eine einfache und ohne Werkzeug ausführbare Montage der Kupplungsteile 16 an der Antriebkette 9.

Das obere Kupplungsteil 16 weist eine - bezogen auf eine Förderrichtung 40 - vordere Begrenzungsfläche 20, eine hintere Begrenzungsfläche 21 und eine Unterseite 22 auf. Parallel zu der Unterseite 22 und zur Förderrichtung 40 verläuft eine Wirkungslinie 23 für eine Antriebskraft F der Antriebskette 9. (Fig. 8)

Die vordere Begrenzungsfläche 20 ist derart ausgebildet, dass eine senkrecht hierauf errichtete Normale n als die Wirkungslinie der Normalkraft-Komponente N mit der Wirkungslinie 23 der Antriebskraft F einen Winkel W einschließt, dessen Wert W > 0° und W < 90° beträgt. Hieraus errechnet sich, dass die Begrenzungsfläche 20 mit der Unterseite 22 einen Winkel W1 > 0° und W1 < 90° einschließt. Im Ausführungsbeispiel betragen die Werte der Winkel W = 70° und W1 = 20°.

Die Ausgestaltung der hinteren Begrenzungsfläche 21 ist spiegelbildlich zu der Begrenzungsfläche 20 ausgebildet. Es ist aber auch denkbar, die hintere Begrenzungsfläche 21 bezüglich des Winkels anders als die vordere Begrenzungsfläche 20 auszugestalten.

Gemäß Fig. 2 ist die Transport-Schiene 1 an ihrer Unterseite 2 mit Lagerflächen 24, 25 ausgebildet, auf denen sich Rollen 26, 27 abstützen. Diese sind drehbar auf einer Achse 28 gelagert, die festes Bestandteil eines aus Kunststoff gefertigten Halteelements 29 ist. Das Halteelement 29 weist eine Öffnung 30 mit einem diese nach unten begrenzenden und winklig verlaufenden Steg 31 auf, auf dem ein Haken 32 eines Bügels 33 mit einem darauf aufgehängten Gegenstand 34 als Fördergut eingehakt ist. Das Halteelement 29 umschließt fest die Achse 28 und erstreckt sich weiter zu einem oberen Ende hin, das in Form eines T-förmigen Ansatzes ausgebildet ist und ein unteres Kupplungsteil 35 bildet. Weiter ist das Halteelement 29 mit einem den eingehängten Bügel 33 identifizierenden Speicherchip 36 ausgestattet. Im Übrigen wird auf die EP 1 690 811 A1 verwiesen, aus der das Halteelement 29 vorbekannt ist. Gemäß Fig. 6 ragt das untere Kupplungsteil 35 des Halteelements 29 in einen zwischen benachbarten oberen Kupplungselementen 16 befindlichen Zwischenraum 37 hinein, der zwischen der hinteren Begrenzungsfläche 21 eines in Förderrichtung 40 vereilenden oberen Kupplungsteiles 16 und der unmittelbar nacheilenden vorderen Begrenzungsfläche 20 eines unmittelbar nacheilenden oberen Kupplungsteils 16 gebildet ist.

Weiter ist an der Transport-Schiene 1 eine Stoppvorrichtung 38 (Fig. 6) mit einem axial verschiebbaren bolzenförmigen Stoppelement 39 angeordnet, das pneumatisch oder elektrisch in eine den Bewegungsraum der Halteelemente 29 freigebende Ruhestellung oder eine den Bewegungsraum der Halteelemente 29 sperrende Arbeitsstellung verlagerbar ist.

Die Arbeitsweise ist wie folgt:

Im Betrieb der Förderanlage erfolgt die Förderung der Halteelemente 29 im unbeladenen oder mit Gegenständen beladenen Zustand in der Förderrichtung 40 derart, dass die unteren Kupplungsteile 35 der Halteelemente 29 in die zwischen benachbarten oberen Kupplungselementen 16 befindlichen Zwischenräume 37 hineinragen, so dass die beiden Kupplungsteile 16, 35 zur Anlage aneinander gelangen und eine Antriebsverbindung in Förderrichtung 40 bilden. Dieser Betriebszustand ist beispielsweise schematisch in Fig. 7 und als vergrößerte Einzelheit in Fig. 8 dargestellt. Das untere Kupplungsteil 35 eines Halteelementes 29 liegt gegen die vordere Begrenzungsfläche eines oberen Kupplungsteiles 16 an.

Gemäß Fig. 8 kann man unter Vernachlässigung von Reibungskräften an der Berührungsstelle der Kupplungsteile 16, 35 eine von der Antriebskette 9 ausgeübte Antriebskraft F als Resultierende einer Normalkraft-Komponente N und einer Hebekraft-Komponente H betrachten, wobei die Hebekraft-Komponente H in dem Betriebszustand des Förderns von Gegenständen kleiner ist als die Kraft, die erforderlich ist, um das obere Kupplungsteil 16 zusammen mit dem anteiligen Eigengewicht der Antriebskette 9 aus ihrer unteren Lage um das Maß einer Verschiebestrecke v nach oben hin anzuheben. Die Verschiebestrecke v ist nur ein Teil der Strecke a, sie ist also kleiner als die Strecke a.

Nach der Einleitung eines erwünschten Stauvorgangs, also dem Aufstauen von Halteelementen 29 ungeachtet ihres Ladezustands unter Bildung einer Staustrecke durch die Aktivierung der Stoppvorrichtung 38 stoppt das axial in den Weg der Halteelemente 29 verschobene Stoppelement 39 das nächst ankommende Halteelement 29. Mit dem fortschreitenden Antrieb der Antriebskette 9 tritt eine Änderung der vorstehend betrachteten Kraftverhältnisse derart ein, so dass die Hebekraft-Komponente H so groß wird, dass das obere Kupplungsteil 16 zusammen mit der Antriebskette 9 gegen die Schwerkraft um die Verschiebestrecke v nach oben (Fig. 7) verschoben wird. Die Antriebskette 9 wird hierbei - wie Fig. 6 und 7 entnehmbar ist - im Bereich der Stoppvorrichtung 38 leicht nach oben um die Verschiebestrecke v angehoben und gebogen. Nach dem Anheben gleitet das obere Kupplungsteil 16 über das untere Kupplungsteil 35 hinweg, wobei das obere Kupplungsteil 16 mit der Unterseite 22 auf dem unteren Kupplungsteil 35 aufliegt. Weiterhin ist festzuhalten, dass beim Fördervorgang zwischen den Kupplungsteilen 16, 35 Haftreibung wirkt, während beim Stauvorgang die niedrigere Gleitreibung wirkt.

Dieser Zustand ist schematisch in Fig. 7 dargestellt. Mit dem weiteren Antrieb der Antriebskette 9 und Aufbau der Staustrecke wiederholt sich dieser Vorgang des Lösens der Antriebsverbindung und ein erneutes Ineinandergreifen aneinander vorbeifahrender Kupplungsteile 16 und 35.

## Patentansprüche

1. Förderanlage für hängende Gegenstände (34), insbesondere für auf Bügeln (33) hängenden Kleidungsstücke,
- mit einer Transport-Schiene (1),
- mit einer in der Transport-Schiene (1) in einer Förderrichtung (40) bewegbar in einem Lager (7, 8) gelagerten Antriebskette (9) mit um vertikale Achsen (10) schwenkbaren Gelenken (11) und mit an ihrer Unterseite (15) befindlichen oberen Kupplungsteilen (16),
- mit an der Transport-Schiene (1) unterhalb der Antriebskette (9) in der Förderrichtung (40) mittels Rollen (26, 27) verschiebbar gelagerten Halteelementen (29) für die Gegenstände (34),
wobei die Haltelemente (29) an ihren oberen Enden angeordnete untere Kupplungsteile (35) aufweisen,
und wobei jeweils ein oberes Kupplungsteil (16) und ein unteres Kupplungsteil (35) eine Antriebsverbindung der Antriebskette (9) mit einem Halteelement (29) zum Fördern in der Förderrichtung (40) bilden,
und wobei
die Kupplungsteile (35,16) derart ausgebildet sind, dass die Übertragung einer Antriebskraft (F) der Antriebskette (9) durch eine Normalkraft-Komponente (N) und eine der Schwerkraft entgegen gerichtete Hebekraft-Komponente (H) erfolgt, wobei die Wirkungslinie (n) der Normalkraft-Komponenete (N) mit der Wirkungslinie (23) der Antriebskraft (F) der Antriebskette (9) einen Winkel W einschließt, und
eine betätigbare Stoppvorrichtung (38) zum Aufstauen von Halteelementen (29) vorgesehen ist, wobei die Hebekraft-Komponente (H) ein Anheben des oberen Kupplungsteils (16) um eine Verschiebestrecke v zum Lösen der Antriebsverbindung bewirkt, **dadurch gekennzeichnet, dass** das Lager (7,8) derart ausgebildet ist, dass die Antriebskette (9) entgegen der Schwerkraft um eine Strecke a nach oben verlagerbar ist, wobei gilt: v < a.

2. Förderanlage nach Anspruch 1, **dadurch gekennzeichnet, dass** die Transport-Schiene (1) im Bereich der Stoppvorrichtung (38) im Wesentlichen waagerecht verläuft.

3. Förderanlage nach Anspruch 1, **dadurch gekennzeichnet, dass** das obere Kupplungsteil (16) eine - bezogen auf die Förderrichtung (40) - vordere, schräg zur Förderrichtung (40) verlaufende Begrenzungsfläche aufweist, die mit der Wirkungslinie (23) der Antriebskraft (F) der Antriebskette einen Winkel W1 einschließt, wobei gilt: 90° > W1 > 0°.

4. Förderanlage nach einem der Ansprüche 1 bis 3, **dadurch gekennzeichnet, dass** für den Winkel W gilt: 90° > W > 0°.

5. Förderanlage nach Anspruch 1, **dadurch gekennzeichnet, dass** die Gelenke (11) sich längs der Achsen (10) erstreckende Bohrungen (10a) mit darin aufgenommenen Zapfen (17, 18) der oberen Kupplungsteile (16) aufweisen.

6. Förderanlage nach Anspruch 5, **dadurch gekennzeichnet, dass** die Zapfen (17, 18) mit einem Schnappverschluss (19) ausgebildet sind.

7. Förderanlage nach einem der Ansprüche 1 bis 6, **dadurch gekennzeichnet, dass** das obere Kupplungsteil (16) aus Kunststoff gebildet ist.

8. Förderanlage nach Anspruch 4, **dadurch gekennzeichnet, dass** für den Winkel W gilt: 90° > W ≥ 45°.

9. Förderanlage nach Anspruch 8, **dadurch gekennzeichnet, dass** für den Winkel W gilt: 80° ≥ W ≥ 70°.

10. Förderanlage nach Anspruch 3, **dadurch gekennzeichnet, dass** für den Winkel W1 gilt: 45° ≥ W1 ≥ 0°.

11. Förderanlage nach Anspruch 10, **dadurch gekennzeichnet, dass** für den Winkel W1 gilt: 20° ≥ W1 ≥ 10°.

12. Förderanlage nach Anspruch 3, **dadurch gekennzeichnet, dass** für die Winkel W und W1 gilt: W + W1 = 90°.

## Claims

1. Conveyor installation for hanging items (34), in particular for pieces of clothing hanging on hangers (33), comprising
- a transport rail (1);
- a drive chain (9) which is mounted in a bearing (7, 8) in the transport rail (1) for movement in a direction of conveyance (40), the drive chain (9) comprising joints (11), which are pivotable about vertical axes (10), and upper coupling members (16) located at its lower side (15);
- retaining members (29) for the items (34), which retaining members (29) are displaceably mounted, in the direction of conveyance (40), to the transport rail (1) below the drive chain (9) by means of rollers (26, 27),
wherein the upper ends of the retaining members (29) are provided with lower coupling members (35),
and wherein in each case one upper coupling member (16) and one lower coupling member (35) form a drive connection of the drive chain (9) with a retaining member (29) for conveyance in the direction of conveyance (40);
and wherein the coupling members (35, 16) are designed in such a way that the transmission of a drive force (F) of the drive chain (9) takes place via a normal force component (N) and a lifting force component (H) which is opposite to gravity, with the line of action (n) of the normal force component (N) forming an angle W with the line of action (23) of the drive force (F) of the drive chain (9); and
- an actuable stopping device (38) is provided for accumulating retaining members (29), with the lifting force component (H) causing the upper coupling member (16) to be lifted upwards by a displacement path v for releasing the drive connection, characterrized in that the bearing (7, 8) is designed in such a way that the drive chain (9) is displaceable upwards by a distance a in a direction opposite to gravity, with v < a.

2. Conveyor installation according to claim 1, **characterized in that** the transport rail (1) is substantially horizontal in the region of the stopping device (38).

3. Conveyor installation according to claim 1, **characterized in that** seen in the direction of conveyance (40), the upper coupling member (16) comprises a front boundary surface which runs at an angle to the direction of conveyance (40) and forms an angle W1 with the line of action (23) of the driving force (F) of the drive chain, with 90° < W1 < 0°.

4. Conveyor installation according to one of claims 1 to 3, **characterized in that** the angle W is such that 90° > W > 0°.

5. Conveyor installation according to claim 1, **characterized in that** the joints (11) comprise bores (10a) which extend along the axes (10), with pins (17, 18) of the upper coupling members (16) being received therein.

6. Conveyor installation according to claim 5, **characterized in that** the pins (17, 18) are provided with a snap fit (19).

7. Conveyor installation according to one of claims 1 to 6, **characterized in that** the upper coupling member (16) is formed of plastics.

8. Conveyor installation according to claim 4, **characterized in that** the angle W is such that 90° > W ≥ 45°.

9. Conveyor installation according to claim 8, **characterized in that** the angle W is such that 80° ≥ W ≥ 70°.

10. Conveyor installation according to claim 3, **characterized in that** the angle W1 is such that 45° ≥ W1 ≥ 0°.

11. Conveyor installation according to claim 10, **characterized in that** the angle W1 is such that 20° ≥ W1 ≥ 10°.

12. Conveyor installation according to claim 3, **characterized in that** the angles W and W1 are such that W + W1 = 90°.

## Revendications

1. Installation de transport pour objets suspendus (34), en particulier pour des vêtements suspendus sur des cintres (33),
- avec un rail de transport (1),
- avec une chaîne d'entraînement (9) logée dans un palier (7, 8) de manière mobile dans un sens de transport (40) dans le rail de transport (1) avec des articulations (11) pouvant pivoter autour d'axes verticaux (10) et avec des éléments d'accouplement supérieurs (16) situés au niveau de sa face inférieure (15),
- avec des éléments de retenue (29) logés de manière déplaçable à l'aide de galets (26, 27) dans le sens de transport (40) sous la chaîne d'entraînement (9) au niveau du rail de transport (1) pour les objets (34),
dans laquelle les éléments de retenue (29) présentent des éléments d'accouplement inférieurs (35) agencés au niveau de leurs extrémités supérieures,
et dans laquelle respectivement un élément d'accouplement supérieur (16) et un élément d'accouplement inférieur (35) forment une liaison d'entraînement de la chaîne d'entraînement (9) avec un élément de retenue (29) pour le transport dans le sens de transport (40),
et dans laquelle
les éléments d'accouplement (35, 16) sont réalisés de telle sorte qu'il y a transmission d'une force d'entraînement (F) de la chaîne d'entraînement (9) par une composante de force normale (N) et une composante de force de levage (H) dirigée dans le sens opposé à la force de gravité, dans laquelle la ligne d'action (n) de la composante de force normale (N) forme un angle W avec la ligne d'action (23) de la force d'entraînement (F) de la chaîne d'entraînement (9), et
un dispositif d'arrêt (38) actionnable pour l'accumulation d'éléments de retenue (29) est prévu, dans laquelle la composante de force de levage (H) entraîne un soulèvement de l'élément d'accouplement supérieur (16) d'une distance de déplacement v pour désolidariser la liaison d'entraînement, **caractérisée en ce que** le palier (7, 8) est réalisé de telle sorte que la chaîne d'entraînement (9) peut être décalée vers le haut d'une distance a dans le sens opposé à la force de gravité, dans laquelle on a : v < a.

2. Installation de transport selon la revendication 1, **caractérisée en ce que** le rail de transport (1) s'étend de manière essentiellement horizontale au niveau du dispositif d'arrêt (38).

3. Installation de transport selon la revendication 1, **caractérisée en ce que** l'élément d'accouplement supérieur (16) présente une surface de délimitation avant, par rapport au sens de transport (40), oblique par rapport au sens de transport (40) qui forme un angle W1 avec la ligne d'action (23) de la force d'entraînement (F) de la chaîne d'entraînement, dans laquelle on a : 90° > W1 > 0°.

4. Installation de transport selon l'une quelconque des revendications 1 à 3, **caractérisée en ce que** pour l'angle W, on a : 90° > W > 0°.

5. Installation de transport selon la revendication 1, **caractérisée en ce que** les articulations (11) présentent des perçages (10a) s'étendant le long des axes (10) avec des broches (17, 18) qui y sont reçues des éléments d'accouplement supérieurs (16).

6. Installation de transport selon la revendication 5, **caractérisée en ce que** les broches (17, 18) sont réalisées avec une fermeture à enclenchement (19).

7. Installation de transport selon l'une quelconque des revendications 1 à 6, **caractérisée en ce que** l'élément d'accouplement supérieur (16) est en plastique.

8. Installation de transport selon la revendication 4, **caractérisée en ce que** pour l'angle W on a : 90° > W ≥ 45°.

9. Installation de transport selon la revendication 8, **caractérisée en ce que** pour l'angle W on a : 80° ≥ W ≥ 70°.

10. Installation de transport selon la revendication 3, **caractérisée en ce que** pour l'angle W1 on a : 45° ≥ W1 ≥ 0°.

11. Installation de transport selon la revendication 10, **caractérisée en ce que** pour l'angle W1 on a : 20° ≥ W1 ≥ 10°.

12. Installation de transport selon la revendication 3, **caractérisée en ce que** pour les angles W et W1 on a : W + W1 = 90 °.
